# EUROPEAN PATENT SPECIFICATION

(11) **EP 2 658 089 B1**
(45) Date of publication and mention of the grant of the patent: **22.09.2021**
(21) Application number: 13165144.0
(22) Date of filing: 24.04.2013
(51) Int. Cl.: H02K 1/20

(54) **Stator cooling channel tolerant to localized blockage**
Gegen lokale Blockierung toleranter Statorkühlkanal
Canal de refroidissement de stator tolérant au blocage locale

(30) Priority: 24.04.2012 US 201213454415
(43) Date of publication of application: 30.10.2013
(73) Proprietor: Hamilton Sundstrand Corporation, Charlotte, NC 28217 (US)
(72) Inventor: Pal, Debabrata, Hoffman Estates, IL Illinois 60195 (US); Coldwate, Joseph Kenneth, Roscoe, IL Illinois 61073 (US); Beck, John M., Windsor, CT Connecticut 06095 (US)
(74) Representative: Dehns

(56) References cited:
- JP-A- 2010 154 678
- JP-B2- 3 583 234
- JP-U- S58 127 834
- None

## Description

### BACKGROUND OF THE INVENTION

Exemplary embodiments of this invention generally relate to electrical machines and, more particularly, to a stator structure of an electrical machine for improved cooling.

A stator generates a considerable amount of heat during operation. It is important to remove this heat because overheating of the stator may reduce the life and performance of motors and generators, thereby limiting the range of applications in which they may be used. Conventional stators include a plurality of fins disposed around the outer circumference of the stator. A cooling fluid, such as air, oil, or another coolant for example, will flow through the cooling channels created between adjacent fins to remove heat from the stator through convection.

In some applications, foreign material from the environment, such as dirt and debris, will enter the stator. This foreign material may become lodged in the stator, forming a blockage in one or more of the cooling channels. The blockage impedes the flow of the cooling fluid to a portion of the stator, such that heat from that area of the stator is not efficiently removed. Occurrence of such blockages cause the temperature of the stator to rise and can ultimately lead to a failure.

Stator cooling structures are taught in JP 2010 154678, JP 3583234 and JP 858127834.

### BRIEF DESCRIPTION OF THE INVENTION

The invention is defined by device claim 1. Preferred embodiments of invention are disclosed in dependent claims 2-10.

According to one embodiment, disclosed herein and defined in claim 1, a stator core of a motor or generator is provided including a stacked stator laminations that form a plurality of outwardly extending fins and a plurality of cooling channels between the fins. Each stator lamination includes a gap larger than a cooling channel. Each stator lamination or group of laminations is rotated relative to a previous stator lamination or group of laminations in the stack. The gaps of adjacent stator laminations overlap such to connect a cooling channel to adjacent cooling channels.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a front view of a stator lamination according to an embodiment of the invention;
FIG. 2 is a top view of a stator core according to an embodiment of the invention; and
FIG. 3 is a perspective view of a stator core according to an example suitable for understanding the invention.

The detailed description explains embodiments of the invention, together with advantages and features, by way of example with reference to the drawings.

### DETAILED DESCRIPTION OF THE INVENTION

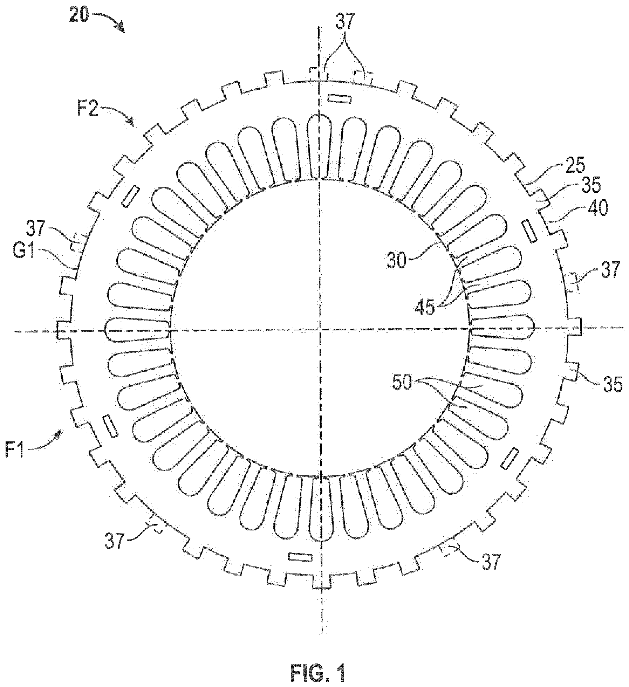

Referring now to FIG. 1, a generally circular stator lamination 20 is illustrated. The stator lamination 20 may be made from iron or any other conventionally used material. The stator lamination 20 includes a plurality of outwardly projecting fins 35, located around the outer circumference 25 thereof. The fins 35 define an outer periphery of a stator. In one embodiment, the fins 35 are uniform in size. A plurality of cooling channels 40 are created between adjacent fins 35 such that a cooling fluid (not shown) may flow through the cooling channels 40 to remove heat from the stator lamination 20. The stator lamination 20 additionally includes a plurality of inwardly projecting teeth 45 that define the inner periphery of a stator. The teeth 45 also provide winding spaces 50 that receive the windings (not shown) of the stator.

In one embodiment, the stator lamination 20 fins 35 are positioned around the outer circumference 25 in groups of equally spaced fins 35 and cooling channels 40. Adjacent groups of fins 35, such as groups F1 and F2 for example, are separated by a gap, such as G1 for example. The gaps G separating adjacent groups F of fins 35 have a width greater than the width of the cooling channels 40 created by the equally spaced fins 35 with the group F. The gaps G between adjacent groups F of equally spaced fins 35 may be uniform in size, or alternately, may vary in size.

In another embodiment, the fins 35 are equally spaced around the outer circumference 25 of the stator lamination 20. At least one fin 35 is then removed from the outer circumference 25 of the stator laminator 20. Removing a fin 35 connects the cooling channels 40 that were located on each side of the removed fin 35, thereby forming a gap G. In one embodiment, the width of gap G is comparable to the width of two cooling channels and the width of a fin 35. Exemplary removed fins are illustrated by gray dotted lines and are given reference numeral 37 for descriptive purposes. Fins 35 may be removed at an equal spacing around the circumference 25 of the stator laminator 20, such as every seventh fin 35 for example. In one embodiment, six fins 35 are removed from a stator lamination 20 originally having thirty six fins 35. Additional fins 35 may be removed to create more gaps, or larger gaps G, as necessary based upon the application.

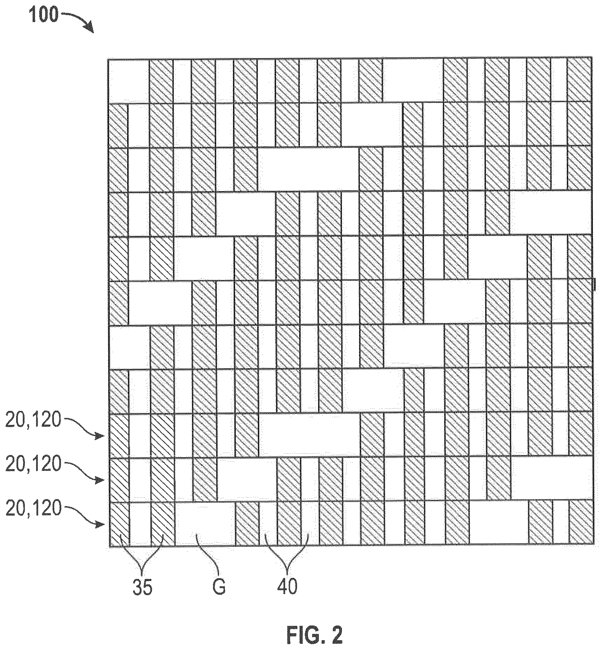

Referring now to FIG. 2, an exemplary stator core 100 for use in a motor or generator is illustrated. The stator core 100 is formed by stacking multiple stator laminations 20. The plurality of stator laminations 20 used to create the stator core 100 may be identical and manufactured using the same tool, such as a stamping die for example. In one embodiment, the stator laminations 20 are arranged into groups 120, such as groups of ten for example. Groups 120 of stator laminations 20 are then stacked to form a stator core 100. If the stator laminations 20 are arranged into groups 120, the fins 35, cooling channels 40, removed fins, and gaps G of each stator lamination 20 are aligned such that each group 120 resembles a stator lamination 20 having a certain depth.

In one embodiment each adjacent stator lamination 20 is rotated relative to an adjacent stator lamination 20 or alternatively, adjacent groups 120 of stator laminations 20 are rotated relative to one another. Each stator lamination 20 or group 120 of stator laminations 20 is rotated such that a gap G overlaps a portion of the gap G of the previous stator lamination 20 or group 120 of stator laminations 20. The stator lamination 20 or group 120 of stator laminations 20 is also rotated such that the majority of the fins 35 arc aligned with the fins 35 of the previous stator lamination 20, or group 120 of stator laminations 20, to form fins 35 and cooling channels 40 that extend along the depth of the stator core 100. In one embodiment, stator laminations 20, or groups 120 of stator laminations 20, are rotated sixty degrees relative to the previously stacked stator lamination 20, or group 120 of stator laminations 20 respectively. By rotating each stator lamination 20 or group 120 of stator laminations 20, adjacent cooling channels 40 are connected by the overlapping gap G. In one embodiment, all of the cooling channels 40 are connected. Thus, if a blockage occurs and prevents the flow of a cooling fluid through a portion of a cooling channel 40, the cooling fluid will divert to the adjacent cooling channels 40, and heat will still be removed from that portion of the stator core 100.

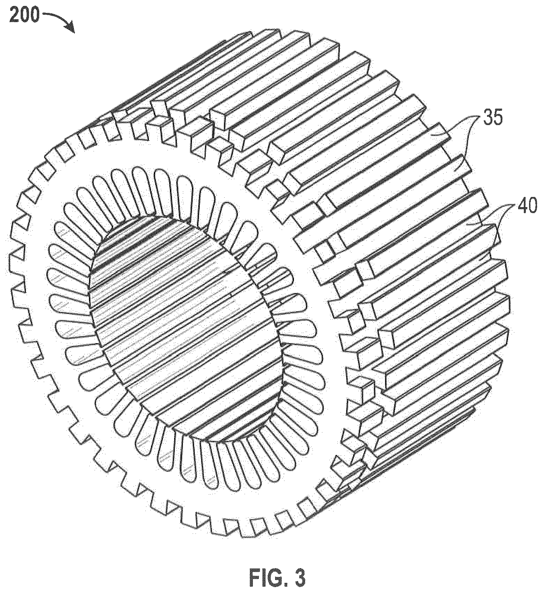

FIG. 3 illustrates a stator core 200 in accordance with an example suitable for understanding the invention. Stator core 200 is similarly formed by stacking multiple stator laminations 20. In one example, the stator laminations 20 used to form the stator core 200 do not include any gaps G and have fins 35 equally spaced around the outer circumference 25 of the lamination 20. The stator laminations 20 may be arranged so that the fins 35 and cooling channels 40 are aligned to form a stator core 200 having a uniform cross-section along the depth of the stator core 200. In one example, after the stator laminations 20 have been stacked, a portion of at least one fin 35 of the stator core 200 is removed, such as by milling for example. In another example, a portion of all of the fins 35 of the stator core 200 is removed.

The portions removed from the fins 35 may be equal or alternately may vary in size. The openings to join the channels can be formed orthogonal to the walls of the cooling channel or formed at an angle to enhance flow characteristics. Additionally, the portion removed may be located at the same position for each fin 35, or at varying positions along the depth of the stator core 200. In one example, the portion removed from adjacent fins 35 is not located at the same position along the depth of the stator core 200. The portion of the fin 35 that is removed may alternate between a first position and a second position along the depth of the stator core 200. For example, a first fin may have a portion removed at a first location, a second adjacent fin may have a portion removed at a second location, a third fin adjacent the second fin may have a portion removed at a first location and so on around the outer circumference 25 of the stator core 200. By removing a portion of the fins 35, adjacent cooling channels 40 are connected such that if a blockage exists in a cooling channel 40, the cooling fluid will flow to the adjacent cooling channels 40 to remove heat from that portion of the stator core 200.

## Claims

1. A stator core (100) for use in a motor or generator comprising:
a plurality of stacked stator laminations (20) wherein each stator lamination (20) includes a plurality of fins (35) projecting outwardly from the circular body and positioned in groups of equal spacing around an outer circumference (25) of the circular body; wherein a cooling channel (40) is defined between a first fin and a second adjacent fin within a group; and wherein adjacent groups of fins (35) are separated by a gap (G), wherein the stator lamination includes a plurality of gaps (G), the gaps between adjacent groups of equally spaced fins varying in size;
**characterized in that**
each gap (G) between the adjacent groups of equally spaced fins has a width larger than a width of the cooling channel (40), and
wherein each stator lamination (20) is rotated relative to a previous stator lamination (20) in the stack, such that a gap of a first stator lamination overlaps a gap of a second stator lamination preceding the first stator lamination, and thereby connecting a cooling channel (40) to adjacent cooling channels.

2. The stator core according to claim 1, wherein the stator laminations (20) are formed into groups of aligned stator laminations, and adjacent groups are rotated relative to one another.

3. The stator core according to claim 2, wherein each group includes ten stator laminations (20).

4. The stator core according to claim 1, wherein each stator lamination (20) is rotated sixty degrees.

5. The stator core according to claim 1, wherein the stacked stator laminations (20) are identical.

6. The stator core (100) according to any preceding claim, wherein each stator lamination (20) further comprises:
a plurality of teeth (45) projecting inwardly from the circular body that provide a space to receive a winding,

7. The stator core (100) according to any preceding claim, wherein the gaps (G) between the adjacent groups are created by removing an equally spaced fin (35) from around the circumference such that the cooling channels (40) adjacent the removed fin are connected.

8. The stator core (100) according to any preceding claim, wherein each stator lamination (20) includes five gaps generally equally spaced around the outer circumference.

9. The stator core (100) according to any preceding claim, wherein the plurality of fins (35) is uniform in size and the plurality of cooling channels (40) is uniform in size.

10. The stator core (100) according to any preceding claim , wherein each stator lamination (20) is formed by a stamping operation.

## Patentansprüche

1. Statorkern (100) zur Verwendung in einem Motor oder Generator, umfassend:
eine Vielzahl von gestapelten Statorblechen (20), wobei jedes Statorblech (20) eine Vielzahl von Lamellen (35) beinhaltet, die von dem kreisförmigen Körper nach außen ragt und in Gruppen gleichen Abstands um einen Außenumfang (25) des kreisförmigen Körpers herum positioniert ist; wobei ein Kühlkanal (40) zwischen einer ersten Lamelle und einer zweiten angrenzenden Lamelle innerhalb einer Gruppe definiert ist; und wobei angrenzende Gruppen von Lamellen (35) durch einen Spalt (G) getrennt sind, wobei das Statorblech eine Vielzahl von Spalten (G) beinhaltet, wobei die Spalte zwischen angrenzenden Gruppen von gleich beabstandeten Lamellen in der Größe variieren;
**dadurch gekennzeichnet, dass**
jeder Spalt (G) zwischen den angrenzenden Gruppen von gleich beabstandeten Lamellen eine Breite aufweist, die größer als eine Breite des Kühlkanals (40) ist, und
wobei jedes Statorblech (20) relativ zu einem vorherigen Statorblech (20) in dem Stapel gedreht wird, sodass ein Spalt eines ersten Statorblechs einen Spalt eines zweiten Statorblechs, das dem ersten Statorblech vorangeht, überlappt und dadurch einen Kühlkanal (40) mit angrenzenden Kühlkanälen verbindet.

2. Statorkern nach Anspruch 1, wobei die Statorbleche (20) in Gruppen ausgerichteter Statorbleche ausgebildet sind und angrenzende Gruppen relativ zueinander gedreht werden.

3. Statorkern nach Anspruch 2, wobei jede Gruppe zehn Statorbleche (20) beinhaltet.

4. Statorkern nach Anspruch 1, wobei jedes Statorblech (20) um sechzig Grad gedreht ist.

5. Statorkern nach Anspruch 1, wobei die gestapelten Statorbleche (20) identisch sind.

6. Statorkern (100) nach einem der vorhergehenden Ansprüche, wobei jedes Statorblech (20) ferner Folgendes umfasst:
eine Vielzahl von Zähnen (45), die von dem kreisförmigen Körper nach innen ragen, die einen Abstand zum Empfangen einer Wicklung bereitstellen,

7. Statorkern (100) nach einem der vorhergehenden Ansprüche, wobei die Spalte (G) zwischen den angrenzenden Gruppen durch Entfernen einer gleich beabstandeten Lamelle (35) von um den Umfang herum entstehen, sodass die Kühlkanäle (40) angrenzend an die entfernte Lamelle verbunden sind.

8. Statorkern (100) nach einem der vorhergehenden Ansprüche, wobei jedes Statorblech (20) fünf Spalte beinhaltet, die im Allgemeinen um den Außenumfang herum gleich beabstandet sind.

9. Statorkern (100) nach einem der vorhergehenden Ansprüche, wobei die Vielzahl von Lamellen (35) eine einheitliche Größe aufweist und die Vielzahl von Kühlkanälen (40) eine einheitliche Größe aufweist.

10. Statorkern (100) nach einem der vorhergehenden Ansprüche, wobei jedes Statorblech (20) durch einen Stanzvorgang ausgebildet ist.

## Revendications

1. Noyau de stator (100) destiné à être utilisé dans un moteur ou un générateur comprenant :
une pluralité de tôles de stator empilées (20) dans lequel chaque tôle de stator (20) comporte une pluralité d'ailettes (35) faisant saillie vers l'extérieur depuis le corps circulaire et positionnées en groupes d'espacement à équidistance autour d'une circonférence externe (25) du corps circulaire ; dans lequel un canal de refroidissement (40) est défini entre une première ailette et une seconde ailette adjacente à l'intérieur d'un groupe ; et dans lequel des groupes adjacents d'ailettes (35) sont séparés par un entrefer (G), dans lequel la tôle de stator comporte une pluralité d'entrefers (G), les entrefers entre des groupes adjacents d'ailettes équidistantes variant en taille ;
**caractérisé en ce que**
chaque entrefer (G) entre les groupes adjacents d'ailettes équidistantes a une largeur supérieure à une largeur du canal de refroidissement (40), et
dans lequel chaque tôle de stator (20) est tournée par rapport à une tôle de stator précédente (20) dans l'empilement, de sorte qu'un entrefer d'une première tôle de stator chevauche un entrefer d'une seconde tôle de stator précédant la première tôle de stator, et reliant ainsi un canal de refroidissement (40) aux canaux de refroidissement adjacents.

2. Noyau de stator selon la revendication 1, dans lequel les tôles de stator (20) sont formées en groupes de tôles de stator alignées, et les groupes adjacents sont tournés les uns par rapport aux autres.

3. Noyau de stator selon la revendication 2, dans lequel chaque groupe comporte dix tôles de stator (20).

4. Noyau de stator selon la revendication 1, dans lequel chaque tôle de stator (20) est tournée à soixante degrés.

5. Noyau de stator selon la revendication 1, dans lequel les tôles de stator empilées (20) sont identiques.

6. Noyau de stator (100) selon une quelconque revendication précédente, dans lequel chaque tôle de stator (20) comprend en outre :
une pluralité de dents (45) faisant saillie vers l'intérieur depuis le corps circulaire qui fournissent un espace pour recevoir un enroulement,

7. Noyau de stator (100) selon une quelconque revendication précédente, dans lequel les entrefers (G) entre les groupes adjacents sont créés en retirant une ailette équidistante (35) autour de la circonférence de sorte que les canaux de refroidissement (40) adjacents à l'ailette retirée sont reliés.

8. Noyau de stator (100) selon une quelconque revendication précédente, dans lequel chaque tôle de stator (20) comporte cinq espaces généralement équidistants autour de la circonférence externe.

9. Noyau de stator (100) selon une quelconque revendication précédente, dans lequel la pluralité d'ailettes (35) est de taille uniforme et la pluralité de canaux de refroidissement (40) est de taille uniforme.

10. Noyau de stator (100) selon une quelconque revendication précédente, dans lequel chaque tôle de stator (20) est formée par une opération d'emboutissage.
